# FASCICULE DE BREVET EUROPEEN

(11) **EP 0 546 910 B1**
(45) Date de publication et mention de la délivrance du brevet: **01.05.1996**
(21) Numéro de dépôt: 92403301.2
(22) Date de dépôt: 07.12.1992
(51) Int. Cl.: C12C 1/02, C12C 1/027, C12C 1/15

(54) **Installation de trempage de grains**
Getreideweichungsanlage
Grain steeping vessel

(30) Priorité: 10.12.1991 FR 9115281
(43) Date de publication de la demande: 16.06.1993
(73) Titulaire: NORDON & CIE, F-54001 Nancy Cèdex (FR)
(72) Inventeur: Sauvage, René, F-54690 Eulmont (FR); Roget, James, F-54420 Pulnoy (FR); Amstutz, Jean, F-54110 Remereville (FR); Flament, Guy, F-54290 Bayon (FR)
(74) Mandataire: Picard, Jean-Claude Georges

(56) Documents cités:
- DE-A- 1 917 972
- GB-A- 1 538 177
- GB-A- 2 135 692

## Description

La présente invention concerne une installation de trempage de grains, notamment pour la malterie, du type comportant une cuve pourvue d'une paroi latérale cylindrique, d'un fond et d'un plateau perforé disposé à une certaine distance du fond et sur lequel le grain devant être soumis à des opérations telles que trempage, germination, séchage ou touraillage, repose suivant une couche d'épaisseur convenable, la surface supérieure de cette couche de grains pouvant être égalisée par un système rotatif à bras de raclage portant des pales et associés à des premiers moyens moteurs propres à les faire tourner, des seconds moyens moteurs étant accouplés audit système pour le rendre mobile verticalement.

La cuve peut recevoir par exemple une charge d'orge sec et être remplie d'eau, l'objectif étant dans ce cas d'amener par trempage l'orge à environ 45% d'humidité et d'initier la germination qui se poursuivra dans une deuxième phase du procédé, ces deux phases pouvant en partie avoir lieu dans la même cuve.

Le système de bras à pales de raclage comprend essentiellement un ou plusieurs bras reliés à un moyeu central, chaque bras comportant des pales orientées qui, suivant le sens de rotation, poussent le grain vers l'extérieur ou le ramènent vers l'intérieur. Dans les cuves de trempage, le système de bras à pales de raclage comporte un dispositif de montée et descente permettant de le placer au niveau adéquat ; c'est le rôle des seconds moyens moteurs mentionnés plus haut.

Actuellement on cherche, dans de telles installations, à :
- abaisser au maximum la consommation d'eau, et par exemple à utiliser moins de 4,5 m³ d'eau par tonne de malt;
- limiter au maximum les rejets, par exemple des produits de nettoyage à recycler ; et
- obtenir une installation entièrement nettoyable ; durant tout le fonctionnement, il ne devra exister aucune zone où des salissures pourraient s'accumuler. Ce concept ne se limite pas à la désinfection, qui a pour but de tuer les micro-organismes et d'éviter les proliférations avec les désagréments attenants : fermentation, odeurs, déviation du processus. Dans la désinfection, en effet, les salissures restent en place mais sont neutralisées ; le nettoyage implique non seulement la désinfection mais également l'élimination des salissures.

Ce dernier critère exige donc que, par conception, l'installation et en particulier la cuve de trempage ne puissent retenir que le moins possible de salissures, et que toutes les parties de la cuve soient facilement accessibles pour un nettoyage et un examen.

Jusqu'à présent, on a tenté de résoudre ces problèmes de la façon suivante.

La technique de nettoyage la plus répandue consiste à utiliser un jet d'eau sous pression, avec éventuellement addition de produits de nettoyage adaptés.

La face supérieure du plateau perforé est nettoyée automatiquement, par exemple par des rampes ou des tourniquets reliés au système à bras et pales de raclage et qui assurent également le nettoyage du fût central éventuellement prévu pour supporter et guider ledit système de raclage verticalement, ainsi que des parois de la cuve. La partie la plus délicate à nettoyer est l'espace situé entre le fond et le plateau perforé, en particulier la face inférieure de ce dernier, ainsi que les éléments de la structure portante.

Pour résoudre ce problème, la solution la plus courante consiste à positionner par construction, c'est-à-dire à demeure, le plateau perforé à hauteur d'homme, et à faire effectuer le nettoyage par un opérateur disposant d'un matériel haute pression. Ce travail est long, difficile, dangereux (sol glissant) et sa qualité dépend de l'opérateur. A cela, il faut ajouter que la structure portante du plateau repose sur des potelets pour résister à la charge'du grain. L'opérateur doit donc se mouvoir dans une forêt de potelets, qui par ailleurs gêne l'automatisation par robot.

Cette solution présente l'inconvénient supplémentaire de nécessiter un volume d'eau très important pour remplir l'espace entre fond et plateau perforé ; la consommation d'eau est ainsi accrue sans profit pour le traitement du grain.

On a donc imaginé une autre solution, consistant à prévoir un plateau perforé mobile verticalement, et à ne le lever qu'au moment du nettoyage, ce plateau ayant ainsi, au cours du fonctionnement normal, sa hauteur habituelle au-dessus du fond de la cuve. Ainsi, la hauteur sous plateau perforé est réduite à son minimum, ce qui, lors du trempage, permet de maintenir les caractéristiques habituelles du procédé, en particulier le débit d'extraction de CO2 (8 à 10 m³/s) et le débit d'air comprimé (180 à 200 mm de colonne d'eau). Cette solution nécessite toutefois d'introduire sous le plateau des actionneurs pour son levage ; ces actionneurs se trouvent alors immergés dans l'eau de trempage et peuvent constituer des zones d'accumulation de salissures difficiles à nettoyer. Il est par ailleurs nécessaire d'introduire un fluide sous le plateau perforé (électricité, air comprimé, hydraulique, ...) pour l'alimentation des actionneurs précités, ce qui constitue un inconvénient supplémentaire.

Le but de la présente invention est d'éliminer ces derniers inconvénients de la technique antérieure, tout en conservant le principe du plateau perforé mobile verticalement, pour avoir toujours la facilité d'accès à sa surface inférieure lors du nettoyage.

Pour ce faire, une installation du type défini au début sera, conformément à la présente invention, essentiellement caractérisée en ce qu'elle comporte des moyens de liaison amovibles permettant de relier mécaniquement et momentanément ledit plateau perforé audit système à bras et pales de raclage ou directement auxdits seconds moyens moteurs.

Le système à bras rotatifs et pales de raclage doit être mobile verticalement pour pouvoir s'adapter au niveau atteint par la surface libre du grain dans la cuve, et ceci aussi bien lors du remplissage de cette dernière que lors de son vidage ; c'est la raison d'être des seconds moyens moteurs mentionnés plus haut. L'invention consiste donc à mettre à profit cette particularité, et à permettre d'utiliser momentanément les moyens de levage du système de raclage pour lever le fond perforé lorsque l'on a à procéder aux opérations de nettoyage du fond de la cuve. Ainsi, l'invention ne nécessite que peu de moyens supplémentaires (les moyens amovibles de liaison mécanique momentanée précités), et permet d'éliminer totalement les actionneurs ou analogues, auparavant prévus sous le plateau perforé. On réalise donc une grande économie de moyens, sans augmenter notablement les zones susceptibles de retenir les salissures, et même en en éliminant certaines.

L'invention peut se mettre en oeuvre selon différentes variantes, dont certaines seront décrites ci-dessous à titre d'exemples nullement limitatifs, avec référence aux figures du dessin annexé dans lequel :
- la figure 1 est une vue schématique en coupe d'une installation de trempage de grains conforme à l'invention ;
- les figures 2 et 3 représentent des détails de cette installation ; et
- les figures 4 et 5 représentent certains détails d'une variante de réalisation de cette installation.

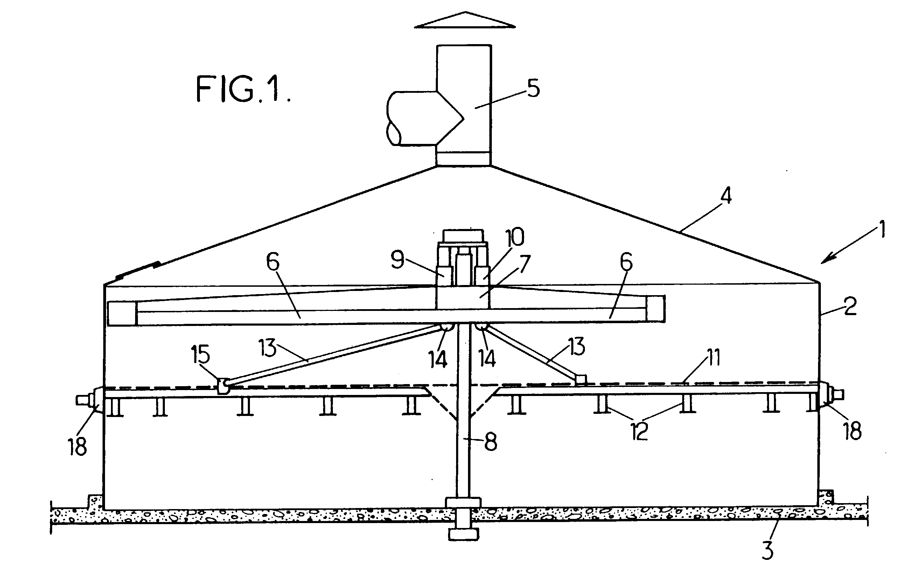

L'installation de la figure 1 comporte une cuve 1 à paroi latérale cylindrique 2, fermée en bas par un fond 3 et en haut par un dôme 4 pourvu centralement d'une conduite 5 servant à l'évacuation des gaz lors du fonctionnement. Il peut s'agir d'une cuve de malterie ou analogue, dont le fonctionnement n'a pas à être décrit plus en détail, sauf pour les parties qui concernent plus spécifiquement l'invention. Pour ce qui est du système à bras et pales de raclage, on pourra d'ailleurs se reporter par exemple au brevet français n° 1 583 824 ou à son certificat d'addition n° 2 125 780 au nom de la demanderesse. Ce système peut comporter par exemple trois bras horizontaux 6 s'étendant à 120° l'un de l'autre et reliés à un moyeu central 7 propre à tourner et à coulisser sur un fût ou colonne axiale 8 de la cuve. Les pales montées sur ces bras (non représentées) peuvent être orientables, pour déplacer la surface supérieure de grain en direction centripète ou en direction centrifuge, en fonction des opérations à réaliser (remplissage de la cuve, vidage, etc.). Le moyeu 7 porte un premier moteur 9 propre à entraîner le système de raclage en rotation par l'intermédiaire d'un ensemble d'engrenages réducteurs, et un second moteur 10 propre à entraîner le moyeu 7 en coulissement sur la colonne 8, par exemple par l'intermédiaire d'un système à pignon et crémaillère. Cette partie de la cuve étant connue par le certificat d'addition précité, il n'est pas nécessaire non plus de la décrire plus avant.

La cuve comporte, encore de façon connue, un plateau perforé 11 (ou faux-fond), disposé au-dessus du fond 3 et destiné à supporter le grain tout en permettant l'évacuation de l'eau après trempage. Ce faux-fond 11 est normalement supporté par le fond 3 par l'intermédiaire d'un ensemble de potelets 12.

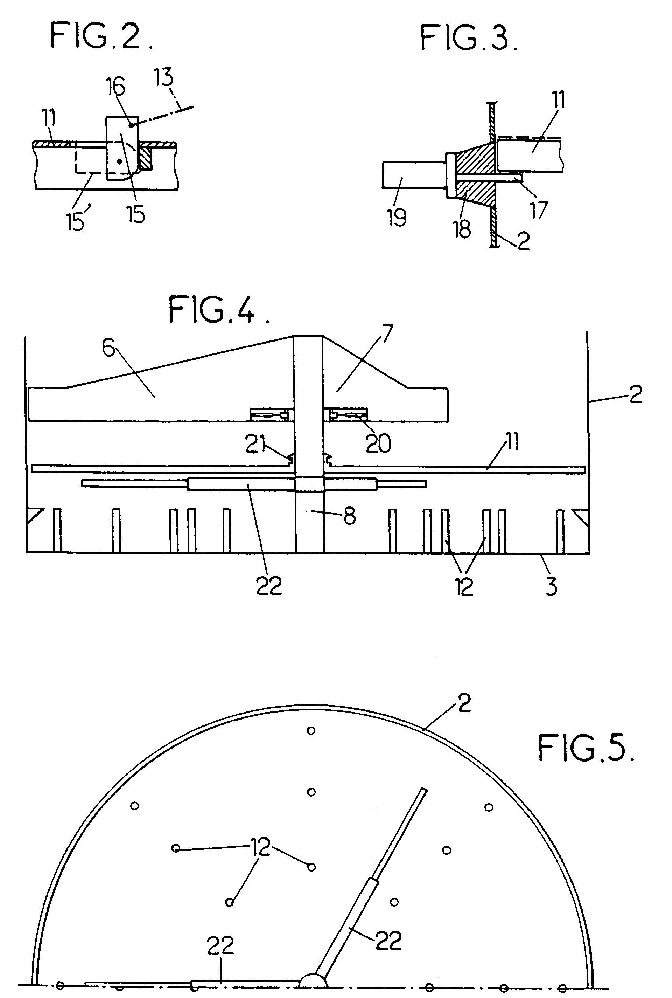

Conformément à l'invention et pour les raisons invoquées plus haut, ce plateau perforé 11 est rendu mobile en hauteur, à l'intérieur de la cuve 1. Pour ce faire, selon un premier mode de réalisation, on prévoit entre le plateau 11 et les bras 6 trois tirants détachables 13, à savoir un tirant par bras. Ces tirants 13 sont articulés en 14 au bras 6 correspondant (ou directement au moyeu 7), de sorte qu'au cours du fonctionnement normal de la cuve, les potelets 12 reposant sur le fond 3, ces tirants 13 puissent être bloqués par des moyens de verrouillage quelconques le long des bras 6, ou à l'intérieur des bras, pour ne pas gêner le raclage et ne pas charger supplémentairement le moteur 9. L'autre extrémité des tirants 13 comporte un moyen amovible d'accrochage et de pivotement sur le plateau 11, comme représenté en détail sur la figure 2. Une chape ou analogue 15, sur laquelle l'extrémité du tirant 13 peut être clavetée (en 16) peut, comme on le voit en 15', être repliée à l'intérieur du plateau 11, après dételage de cette extrémité du tirant 13, lorsque l'on veut rabattre tous les tirants contre les bras 6 correspondants, et permettre ainsi la redescente du plateau 11 en position basse.

Avantageusement, les points de liaison des tirants 13 audit plateau perforé 11 sont situés approximativement aux 2/3 du rayon de la cuve 1, cette distance étant mesurée à partir de son axe. Cela permet d'optimiser la structure portante, et de la dimensionner pour que, sous l'influence de son poids propre, la flèche du faux-fond 11 ne dépasse pas lors de son levage une valeur maximale, par exemple 100 mm.

Il est à noter par ailleurs que les tirants d'accrochage 13 peuvent être métalliques (par exemple en acier inoxydable pour satisfaire aux exigences de propreté), mais pourraient également être en tout autre matériau, par exemple en matériau composite (plastique renforcé de fibres) pour diminuer leur poids et rendre leur manutention plus facile par un opérateur.

Un dispositif de manoeuvre à treuil ou suivant tout autre système pourrait également être installé pour faciliter la manoeuvre de ces tirants 13 par l'opérateur. Leur manoeuvre pourrait également être automatisée si nécessaire.

La figure 3 représente le détail des verrous ou arrêtoirs représentés sur la figure 1. On voit qu'ils peuvent traverser la paroi 2 de la cuve (avec système d'étanchéité) et coulisser dans une embase de guidage extérieure 18, ce coulissement pouvant être commandé automatiquement par exemple par un petit vérin 19 ou analogue. Ces arrêtoirs, dont un certain nombre peuvent être prévus tout autour de la cuve 1, soutiendront, une fois actionnés, le plateau perforé 11 par sa périphérie, lorsque celui-ci sera parvenu à sa position haute, soulageront les tirants 13 et le système de raclage, et constitueront une sécurité pour le préposé au nettoyage lorsque ce levage du plateau lui aura permis de pénétrer dans la cuve 1, dans l'espace de volume ainsi augmenté, ménagé entre le fond 3 et le plateau 11, pour nettoyer la partie inférieure de la cuve.

Il découle ainsi clairement de ce qui précède que lorsque l'on souhaite procéder aux opérations de nettoyage de la cuve 1, celle-ci étant vide de grains, on procèdera de la façon suivante :
le moteur 9 étant arrêté, on actionnera le moteur 10 pour permettre la descente du système de raclage à bras 6 jusqu'au niveau voulu. Un opérateur, descendu sur le plateau 11 (reposant alors sur le fond 3 par ses potelets 12), dégagera les tirants 13 des bras 6 et les accrochera au plateau. Le moteur 10 sera alors actionné en sens inverse pour lever le plateau 11 jusqu'au niveau voulu, après quoi les vérins ou analogues 19 seront actionnés pour sortir les arrêtoirs 17 et les amener juste sous la partie périphérique du plateau 11. On pourra ensuite procéder au nettoyage de la cuve, du plateau et de toutes autres parties de l'installation. Lorsque ceci sera terminé, on procèdera aux opérations inverses pour ramener le plateau 11 dans sa position initiale, c'est-à-dire les potelets 12 reposant à nouveau sur le fond 3.

Dans la variante de réalisation des figures 4 et 5, les tirants 13 sont supprimés.

S'agissant, ici encore, d'une installation du type dans laquelle ledit système à bras 6 et pales de raclage est solidaire d'un moyeu 7 propre à coulisser sur une colonne axiale 8 de la cuve, elle pourra se caractériser en ce que ledit moyeu 7 est associé à des moyens de verrouillage 20 sur une pièce centrale 21'dudit plateau perforé 11, également montée coulissante sur ladite colonne axiale 8 de la cuve 1, au-dessous dudit moyeu 7. La forme de ces organes est clairement montrée sur la figure 4. Les moyens de verrouillage 20 peuvent là également être actionnés par des vérins.

Le nettoyage de la cuve 1 et notamment de la face inférieure du plateau 11, des parois 2 de la cuve dans leur partie inférieure, et du fond 3, peut être assuré par une rampe de nettoyage pivotante 22, déployée lorsque le plateau 11 est en position haute. Ceci a été représenté à la figure 4, dans laquelle on a supposé que les potelets 12 - au contraire du mode de réalisation de la figure 1 - restaient fixés au fond 3, ce qui dégage au-dessus d'eux un espace pour la rotation de la rampe de nettoyage 22.

Dans une autre variante, on pourrait encore prévoir que le plateau perforé 11 est autorisé à pivoter lorsqu'il est relié mécaniquement audit système à bras 6 et pales de raclage, et qu'il a été amené par lui en position levée, grâce à quoi la surface inférieure de ce plateau 11 pourrait être nettoyée par une rampe fixe située au-dessous, et ledit plateau 11 pourrait porter lui-même une autre rampe suspendue à lui et propre à nettoyer le fond 3 de ladite cuve 1 et sa paroi latérale 2 lors de sa rotation.

## Revendications

1. Installation de trempage de grains, notamment pour la malterie, du type comportant une cuve (1) pourvue d'une paroi latérale cylindrique (2), d'un fond (3) et d'un plateau perforé (11) disposé à une certaine distance du fond (3) et sur lequel le grain devant être soumis à des opérations telles que trempage, germination, séchage ou touraillage, repose suivant une couche d'épaisseur convenable, la surface supérieure de cette couche de grains pouvant être égalisée par un système rotatif à bras (6) de raclage portant des pales et associés à des premiers moyens moteurs (9) propres à les faire tourner, des seconds moyens moteurs (10) étant accouplés audit système pour le rendre mobile verticalement, caractérisée en ce qu'elle comporte des moyens de liaison amovibles permettant de relier mécaniquement et momentanément ledit plateau perforé (11) audit système à bras (6) et pales de raclage ou directement auxdits seconds moyens moteurs (10).

2. Installation selon la revendication 1, caractérisée en ce que lesdits moyens de liaison comprennent des tirants (13) propres à relier momentanément lesdits bras (6) à pales de raclage audit plateau perforé (11).

3. Installation selon la revendication 2, caractérisée en ce que lesdits tirants (13), lors du fonctionnement normal de la cuve (1), c'est-à-dire en dehors des périodes de nettoyage, sont associés à des moyens de verrouillage propres à les maintenir en position d'attente sur lesdits bras (6) à pales de raclage.

4. Installation selon la revendication 3, caractérisée en ce que lesdits tirants (13) ont chacun une première extrémité reliée en permanence, de façon articulée (en 14), audit système de raclage, tandis que leur extrémité opposée est associée à des moyens (15, 16) amovibles d'accrochage audit plateau perforé (11), ces moyens étant escamotables dans ledit plateau.

5. Installation selon l'une quelconque des revendications 2 à 4, caractérisée en ce que les points de liaison des tirants (13) audit plateau perforé (11) sont situés approximativement aux 2/3 du rayon de la cuve (1), cette distance étant mesurée à partir de son axe.

6. Installation selon l'une quelconque des revendications 2 à 5, caractérisée en ce que lesdits tirants (13) sont associés à des moyens de manoeuvre tels que des treuils et pouvant être actionnés automatiquement.

7. Installation selon l'une quelconque des revendications 2 à 6, du type dans laquelle ledit système à bras (6) et pales de raclage est solidaire d'un moyeu (7) propre à coulisser sur une colonne axiale (8) de la cuve, caractérisée en ce que lesdites premières extrémités des tirants (13) sont articulées (en 14) sur ce moyeu (7).

8. Installation selon la revendication 1, du type dans laquelle ledit système à bras (6) et pales de raclage est solidaire d'un moyeu (7) propre à coulisser sur une colonne axiale (8) de la cuve, caractérisée en ce que ledit moyeu (7) est associé à des moyens de verrouillage (20) sur une pièce centrale (21) dudit plateau perforé (11), également montée coulissante sur ladite colonne axiale (8) de la cuve (1), au-dessous dudit moyeu (7).

9. Installation selon l'une quelconque des revendications précédentes, caractérisée en ce que ladite paroi latérale (2) de la cuve (1) comporte des arrêtoirs mobiles (17) propres à empêcher la descente dudit plateau perforé (11) à partir de sa position levée, ces arrêtoirs (17) pouvant être commandés automatiquement.

10. Installation selon l'une quelconque des revendications précédentes, caractérisée en ce que le plateau perforé (11) est autorisé à pivoter lorsqu'il est relié mécaniquement audit système à bras (6) et pales de raclage, et qu'il a été amené par lui en position levée, grâce à quoi la surface inférieure de ce plateau (11) pourrait être nettoyée par une rampe fixe située au-dessous, et ledit plateau (11) pourrait porter lui-même une autre rampe suspendue à lui et propre à nettoyer le fond (3) de ladite cuve (1) et sa paroi latérale (2) lors de sa rotation.

## Patentansprüche

1. Getreideweichungsanlage, insbesondere für die Mälzerei, mit einem Gärungsbehälter (1), der mit einer lateralen zylindrischen Wand (2) versehen ist, einem Boden (3) und einem perforierten Zwischenboden (11), der in einem bestimmten Abstand von dem Boden (3) angeordnet ist und auf welchem sich das Getreide für Behandlungen wie die Befeuchtung, die Keimung, die Trocknung oder die Darre ansammeln kann, wobei sich dieses in einer Schicht geeigneter Dicke ablagert und wobei die obere Fläche dieser Getreideschicht durch ein rotierendes System aus Abstreifarmen (6) egalisiert werden kann, die mit Blättern versehen und mit ersten Motoreinrichtungen (9) verbunden sind, die der Drehung derselben dienen, sowie mit zweiten Motoreinrichtungen (10), die mit dem genannten System gekoppelt sind, um es vertikal beweglich zu machen, **dadurch gekennzeichnet, daß** klappbare Verbindungseinrichtungen vorgesehen sind, um den perforierten Zwischenboden (11) vorübergehend und mechanisch mit dem genannten System aus Armen (6) und Abstreifblättern oder direkt mit den zweiten Motoreinrichtungen (10) zu verbinden.

2. Anlage nach Anspruch 1, **dadurch gekennzeichnet, daß** die Verbindungseinrichtungen Zugseile (13) einschließen, die sich für eine vorübergehende Verbindung der Arme (6) mit den Abstreifblättern mit dem perforierten Zwischenboden (11) eignen.

3. Anlage nach Anspruch 2, **dadurch gekennzeichnet, daß** die Zugseile (13) während des normalen Betriebes, das heißt zwischen den Reinigungsperioden, mit geeigneten Befestigungseinrichtungen verbunden sind, um sie an den Armen (6) mit den Abstreifblättern in Bereitschaft zu halten.

4. Anlage nach Anspruch 3, **dadurch gekennzeichnet, daß** die Zugseile (13) jeweils ein erstes Ende haben, welches dauerhaft in beweglicher Weise (in 14) mit dem Abstreifsystem verbunden ist, wobei ihr anderes Ende mit beweglichen Befestigungseinrichtungen (15, 16) an dem perforierten Zwischenboden (11) verbunden ist, die in den Zwischenboden versenkbar sind.

5. Anlage nach einer der Ansprüche 2 bis 4, **dadurch gekennzeichnet, daß** die Verbindungspunkte der Zugseile (13) an dem perforierten Zwischenboden (11) ungefähr auf 2/3 des Radius des Gärungsbehälters (1) angeordnet sind, wobei der Abstand ausgehend von seiner Achse gemessen wird.

6. Anlage nach einem der Ansprüche 2 bis 5, **dadurch gekennzeichnet, daß** die Zugseile (13) mit Handhabungseinrichtungen, wie z.B. winden verbunden sind und daß sie automatisch betätigbar sind.

7. Anlage nach einem der Ansprüche 2 bis 6, des Typs, bei dem das System aus Armen (6) und Abstreifblättern mit einer Nabe (7) verschweißt ist, die auf einer axialen Säule (8) des Gärungsbehälters gleiten kann, **dadurch gekennzeichnet, daß** die ersten Enden der Zugseile (13) an der Nabe (7) beweglich (in 14) angelenkt sind.

8. Anlage nach Anspruch 1, der Art, bei dem das System aus Armen (6) und Abstreifblättern mit einer Nabe (7) verschweißt ist, die auf einer axialen Säule (8) des Gärungsbehälters gleiten kann, **dadurch gekennzeichnet, daß** die Nabe (7) mit Verriegelungseinrichtungen (20) an einem zentralen Teil (21) des perforiertes Zwischenbodens (11) verbunden ist, welches unterhalb der Nabe (7) ebenfalls auf der axialen Säule (8) des Gärungsbehälters (1) gleitend montiert ist.

9. Anlage nach einem der vorhergehenden Ansprüche, **dadurch gekennzeichnet, daß** die laterale Wand (2) des Gärungsbehälters (1) bewegliche Anschläge (17) trägt, die ein Herabfahren des perforierten Zwischenbodens (11) aus seiner angehobenen Position verhindern, wobei die Anschläge (17) automatisch betrieben sein können.

10. Anlage nach einem der vorhergehenden Ansprüche, **dadurch gekennzeichnet, daß** der perforierte Zwischenboden (11) schwenken kann, wenn er mechanisch mit dem Sytem aus Armen (6) und Abstreifblättern verbunden ist, und wenn er in seine angehobene Position bewegt wurde, wodurch die untere Fläche des Zwischenbodens (11) durch eine feste unterhalb angeordnete Schiene gereinigt werden kann, wobei der Zwischenboden (11) selbst eine weitere Schiene tragen kann, die der Reinigung des Bodens (3) des Gärungsbehälters (1) und seiner lateralen Wände (2) durch Rotation dient.

## Claims

1. Installation for steeping grains in particular for malting, of the type comprising a tank (1) provided with a cylindrical lateral wall (2), with a bottom (3) and with a perforated platform (11) disposed at a certain distance from the bottom (3) and on which the grain which is to be subjected to operations such as steeping, germination, drying or kilning rests in a layer of suitable thickness, the upper surface of this layer of grains being able to be levelled by a rotary system with raking arms (6) carrying blades and associated with first motor means (9) capable of rotating them, second motor means (10) being coupled to the system in order to make it vertically movable, characterized in that it comprises removable connection means making it possible to connect, mechanically and temporarily, the perforated platform (11) to the system with raking arms and blades or directly to the second motor means (10).

2. Installation as claimed in claim 1, characterized in that said connection means includes tie rods (13) which can detachably connect said raking blade arms (6) with said perforated platform (11).

3. Installation according to claim 2, characterized in that said tie rods (13), during normal operation of tank (1), i.e. outside cleaning periods, are associated with locking means for holding said tie rods in a waiting position on said arms (6) which support said blades.

4. Installation according to claim 3, characterized in that said tie rods (13) each have a first end permanently and hingedly connected (in 14) to said racking system, whereas their opposite ends are associated to removable attaching means (15, 16) to attach them to said perforated platform (11), these means being able to retract into said platform.

5. Installation according to any one of claims 2 to 4, characterized in that the connecting points between said tie rods (13) and said perforated platform (11) are approximately positioned at about 2/3 of the radius of tank (1), this distance being measured from its central axis.

6. Installation according to any one of claims 2 to 5, characterized in that said tie rods (13) are associated with manoeuvring means such as jacks, able to be automatically operated.

7. Installation according to any one of claims 2 to 6, of the type in which said system with arms (6) and raking blades is solidly attached to a hub (7) able to slide along a central column (8) of said tank, characterized in that said first ends of the tie rods (13) are hingedly connected (at 14) on said hub (7).

8. Installation according to claim 1, of the type in which said system with said arms (6) and racking blades is solidly connected to a hub (7) able to slide along a central column (8) of the tank, characterized in that said hub (7) is associated with locking means (20) on a central part (21) of said perforated platform (11), this part being also slidably mounted on the central column (8) of the tank (1), under said hub (7).

9. Installation according to any one of the preceding claims, characterized in that said lateral wall (2) of the tank (1) comprises movable stops (17) able to prevent the descending motion of said perforated platform (11) from its upper position, these stops (17) being able to be automatically operated.

10. Installation according to any one of the preceding claims, characterized in that said perforated platform (11) is allowed to rotate when mechanically connected to said system with the arms (6) and racking blades and when it has been moved by it in an upper position, thanks to which the lower surface of this platform (11) could be cleaned by a fixed ramp positioned beneath, and said platform could bear itself another ramp hanged to it and able to clean the bottom (3) of said tank and its lateral wall (2) during its rotation.
